# EUROPÄISCHE PATENTSCHRIFT

(11) **EP 0 602 491 B1**
(45) Veröffentlichungstag und Bekanntmachung des Hinweises auf die Patenterteilung: **09.10.1996**
(21) Anmeldenummer: 93119606.7
(22) Anmeldetag: 06.12.1993
(51) Int. Cl.: F04D 25/16, F04D 25/02, F16H 1/28

(54) **Getriebe-Verdichteranlage**
Transmission and compressor system
Installation de transmission et de compression

(30) Priorität: 07.12.1992 DE 4241141
(43) Veröffentlichungstag der Anmeldung: 22.06.1994
(73) Patentinhaber: BHS-Cincinnati Getriebetechnik GmbH, 87527 Sonthofen (DE)
(72) Erfinder: Mendel, Jürgen, Dr., D-48308 Senden (DE)
(74) Vertreter: Weickmann, Heinrich, Dipl.-Ing.

(56) Entgegenhaltungen:
- DE-A- 2 113 594
- DE-A- 3 146 160
- DE-A- 4 003 482
- DE-B- 1 095 700
- DE-U- 9 201 858
- FR-A- 1 205 150
- FR-A- 2 234 490
- US-A- 1 435 821

## Beschreibung

Die Erfindung betrifft eine Verdichteranlage mit einem im Antriebsstrang zwischen einer Antriebseinheit und einem Verdichterbereich der Anlage eingeschalteten Zahnradgetriebe, dieses Zahnradgetriebe umfassend ein Getriebegehäuse, in diesem Getriebegehäuse gelagert eine Getriebeeingangswelle, ein eingangsnahes Hauptzahnrad und wenigstens eine von diesem Hauptzahnrad her über ein Ritzel angetriebene zum Verdichterbereich führende Ausgangswelle mit einer Achse.

Von einer solchen Getriebe-Turboverdichteranlage wird in neuester Zeit die Erreichung von Druckverhältnissen von p_{A}/p_{E} = 60 und mehr gefordert, wobei p_{E} den Druck im Verdichtereingang und p_{A} den Druck im Verdichterausgang bedeuten. Voraussetzung hierfür sind die Übertragung großer Momente bei mittleren Drehzahlen für die auf geringem Druckniveau verdichtenden Verdichterstufen und höchste Drehzahlen für die auf höherem Druckniveau verdichtenden Verdichterstufen. Diese höchsten Drehzahlen lassen sich mit einstufigen Getrieben allein nicht mehr erzielen. Es müssen also in einigen Stufen die Verdichtereinheiten durch ein einstufiges und in anderen Verdichterstufen die Verdichtereinheiten durch ein zweistufiges Getriebe angetrieben werden.

Ein Getriebe der eingangs bezeichneten Bauart ist aus der deutschen Patentschrift DE-C2 40 03 482 bekannt. Bei dieser bekannten Ausführungsform ist zum Antrieb einer mit hoher Drehzahl angetriebenen Verdichtereinheit ein zweistufiges Zwischenrad vorgesehen, welches mit einem Zahnring kleineren Durchmessers in Eingriff mit dem Hauptzahnrad steht und mit einem Zahnring größeren Durchmessers in Eingriff mit einem Ritzel einer Ausgangswelle steht.

Eine weitere Vorrichtung eingangs bezeichneter Art ist aus der DE U 92 01 858 bekannt. Dabei kämmt mit dem eingangsnahen Hauptzahnrad ein Trippel-Zahnrad und zwar mit seinem axial mittleren Zahnring geringerer Zähnezahl, während die beiden axial endständigen Zahnringe von jeweils größerer Zähnezahl mit je einem Ritzel einer Ausgangswelle in Eingriff stehen.

Wenn bei den bekannten Lösungen an der Ausgangswelle von einer Verdichtereinheit oder auch von zwei an den beiden Enden der Ausgangswelle angebrachten Verdichtereinheiten ein resultierender Schub auf die Ausgangswelle ausgeübt wird, so kann man diesen resultierenden Schub durch Druckkämme auf den mit dem Ritzel kämmenden Zahnkranz übertragen. Dies ist eine an sich vorteilhafte Lösung, weil an der Übertragungsstelle zwischen den Druckkämmen und einem verzahnungsnahen Anlagebereich des Zahnkranzes relativ geringe Relativbewegungen auftreten, so daß dort verhältnismäßig geringe Reibungsverluste zu erwarten sind im Vergleich zu Reibungsverlusten, die man erwarten müßte, wenn man die Ausgangswelle durch axialschubübertragende Lagerungen lagern wollte. So vorteilhaft diese Lösung aus dem vorstehend angegebenen Gründen sein mag, so verbleibt doch ein gewisses Problem insofern, als resultierender axialer Schub, der durch einen Druckkamm auf einen dem Ritzel vorgeschalteten Zahnkranz übertragen wird, zu einem Kippmoment auf den diesem Zahnkranz zugehörigen Radkörper führt, der zu schwer kontrollierbaren Fehlstellungen Anlaß geben kann.

Ein weiterer Nachteil der bekannten Lösung besteht darin, daß durch Doppel- oder Trippelräder die Gehäusebreite erhöht und damit die "Biegelänge" der mit Ritzel versehenen Ausgangswellen größer wird, was zu unkontrollierbaren Schwingungen führen kann.

Ein weiterer Nachteil der bekannten Lösungen ist es, daß das auf Kompaktheit und Steifigkeit auszulegende Gehäuse größer wird und deshalb weiterer Versteifungsmaßnahmen bedarf. Dieses Getriebegehäuse wird durch Zunahme der Größe und durch Anbringung von Versteifungsmitteln immer noch größer und schwieriger zu handhaben.

Der Erfindung liegt die Aufgabe zugrunde, unter Vermeidung der vorstehend zum Stand der Technik angegebenen Nachteile, eine Verdichteranlage der eingangs bezeichneten Art so auszubilden, daß Kippbelastungen auf Zahnräder reduziert werden und die Gehäusedimensionen möglichst gering gehalten werden können. Weiter soll die Möglichkeit erhalten bleiben, auf bekannte Gehäuseformen zurückgreifen zu können, die bei geringerem Drehzahlbedarf angewandt wurden und serienmäßig zur Verfügung stehen.

Weiter soll die Möglichkeit erhalten bleiben, in ein und derselben Lagerstelle eines Getriebegehäuses wahlweise Wellen für mittlere Drehzahlen und höchste Drehzahlen einbauen zu können.

Zur Lösung dieser Aufgabe wird erfindungsgemäß vorgeschlagen, daß das die Ausgangswelle treibende Ritzel von dem Sonnenrad eines Planetengetriebes gebildet ist; wobei ein Planetenradträger dieses Planetengetriebes an dem Getriebegehäuse festgelegt ist; wobei weiter ein Hohlrad dieses Planetengetriebes an einem gegenüber dem Getriebegehäuse feststehenden Lagerteil drehbar gelagert ist; wobei weiter dieses Hohlrad eine Außenverzahnung im Eingriff mit dem eingangsnahen Hauptzahnrad aufweist; wobei weiter mindestens ein Planetenrad auf dem Planetenradträger gelagert ist und in Zahneingriff mit einer Innenverzahnung des Hohlrads sowie mit einer Außenverzahnung des Sonnenrads steht; wobei weiter das Sonnenrad oder/und die Ausgangswelle durch mindestens einen Druckkamm in axialer Richtung an dem mindestens einen Planetenrad axial festgelegt ist; und wobei dieses mindestens eine Planetenrad an dem Planetenradträger durch eine axialkraftübertragende Lageranordnung in axialer Richtung abgestützt ist.

Bei der erfindungsgemäßen Lösung ergeben sich folgende Vorteile:

Es können wesentlich größere Drehzahlen erzielt werden. So kann beispielsweise zwischen der Drehzahl der Eingangswelle N_{E} und der Drehzahl der Ausgangswelle N_{A} problemlos ein Übersetzungsverhältnis i_{ges.} von 23,5 erzielt werden, was bei Annahme einer Drehzahl der Eingangswelle von 2.980 min⁻¹ zu einer Drehzahl der Eingangswelle N_{A} von 70.000 min⁻¹ führt. Dabei kann der Achsabstand zwischen der Achse des Hauptzahnrads und der Achse der Ausgangswelle bei ca. 559 mm gehalten werden.

Ein resultierender axialer Schub auf die Ausgangswelle wird durch einen oder vorzugsweise durch zwei Druckkämme auf ein oder mehrere vorzugsweise drei Planetenräder übertragen, die in gleichmäßigem Umfangsabstand um die Achse der Ausgangswelle angeordnet sind. Der Effekt geringer Reibung zwischen Druckkamm der Ausgangswelle und angrenzendem Anlagebereich des Planetenrads tritt auch hier ein. Zusätzlich tritt aber der Vorteil ein, daß verhältnismäßig geringe Kippmomente auf den Radkörper des Planetenrads übertragen werden, da dieses Planetenrad nur relativ geringen Radius besitzt. Von dem relativ langsamer laufenden Planetenrad kann der axiale Schub dann relativ einfach auf den Planetenradträger durch ein axialkraftübertragendes Lager, beispielsweise ein Rillen-Kugellager, übertragen werden. Dies wird um so unproblematischer je größer die Zahl der über den Umfang verteilt angeordneten Planetenräder ist. Hinzu kommt, daß die durch Schubkraftübertragung belastenden Lager der Planetenräder angepaßt an die Planetenradlagerzapfen relativ geringen Durchmesser besitzen, so daß damit die Umfangsgeschwindigkeiten in diesen Lagern relativ klein werden.

In Weiterbildung der Erfindung wird vorgeschlagen, daß der mindestens eine Druckkamm an dem mindestens einen Planetenrad in radialer Nähe zu dem Verzahnungsteilkreis des Planetenrads angreift; durch diese Maßnahme wird, wie schon angedeutet, erreicht, daß geringstmögliche Relativgeschwindigkeiten an den Berührungsstellen zwischen Druckkamm und Planetenrad auftreten.

Nach einer bevorzugten Ausgestaltungsform der Erfindung ist vorgesehen, daß die Ausgangswelle durch eine Ausgangswellenlagereinheit in einer Lageröffnung einer Seitenwand des Getriebegehäuses gelagert ist, wobei diese Ausgangswellenlagereinheit einen am Getriebegehäuse in axialer Richtung und in Umfangsrichtung festgelegten Lageraußenteil umfaßt. Stellt man sich vor, daß ein Getriebegehäuse zur Verfügung steht, welches ursprünglich für direkten Eingriff des Ritzels mit einem Zentralrad gedacht war, so kann man also in einer Gehäusewand dieses Getriebegehäuses unter Verwendung des Bohrbilds das für die Lagerung einer solchen Ausgangswelle mit direkt in das Hauptrad eingreifendem Ritzel bestimmt war, eine Ausgangswellenlagereinheit vorsehen, an der alle Lagerfunktionen für das Planetengetriebe übernommen werden können. Eine neue Verbohrung des Getriebegehäuses erübrigt sich damit.

Geht man weiter davon aus, daß die Ausgangswelle bei Einbau des Planetengetriebes im Durchmesser kleiner wird als die Ausgangswelle bei direktem Eingriff ihres Ritzels mit dem Hauptzahnrad, so kann die Ausgangswellenlagereinheit die Durchmesseranpassung der schlankeren Ausgangswelle ohne weiteres übernehmen. Es ist hier noch anzumerken, daß die schlankere Gestaltung der Ausgangswelle bei Einschaltung des Planetengetriebes nicht nur baulich bedingt, sondern auch funktionsmäßig akzeptabel ist, denn durch die Zwischenschaltung des Planetengetriebes kann die Ausgangsdrehzahl erhöht werden und damit eine geforderte Leistung mit geringerem Ausgangswellenquerschnitt übertragen werden.

Die Ausgangswellenlagereinheit wird bevorzugt als Gleitlager ausgeführt. Gleitlager sind im besonderem Maße geeignet, den sehr hohen Drehzahlen standzuhalten. Wie im Zusammenhang mit der Einführung des Lageraußenteils schon angedeutet, kann dieses Lageraußenteil auch Lagerfunktionen für das Planetengetriebe übernehmen, etwa in der Weise, daß der Planetenradträger an dem Lageraußenteil der Ausgangswellenlagereinheit befestigt ist. Dann kann man weiterhin vorsehen, daß das Hohlrad auf dem Planetenradträger gelagert ist.

Im Hinblick auf günstige Momentenübertragungsverhältnisse und ruhigen Lauf wird empfohlen, daß die Außenverzahnung des Hohlrads als eine Einfachschrägverzahnung ausgebildet ist. Dann muß man für eine Axialabstützung des Hohlrads Sorge tragen und kann dies dadurch erreichen daß das Hohlrad an mindestens einem seiner axialen Enden an dem Planetenradträger durch ein axialkraftübertragendes Kugellager, insbesondere Schrägkugellager, gelagert ist.

Eine von der Montage und vom Raumbedarf her besonders günstige konstruktive Getriebeeinbaulösung besteht darin, daß der Lageraußenteil der Ausgangswellenlagereinheit mit einem im Umfangsbereich der Lageröffnung an der Innenseite der Gehäusewand anliegenden Stützring ausgeführt ist, daß an diesem Stützring in einem radial inneren Bereich desselben ein Trägerhals des Planetenradträgers befestigt ist, daß dieser Trägerhals des Planetenradträgers an einem planetenradnahen Ende mit einem radial auswärtsgerichteten Planetenradträgerflansch ausgebildet ist und daß ein radial einwärts gerichteter Hohlradträgerflansch in axialer Richtung zwischen dem Planetenradträgerflansch und dem Stützring auf dem Planetenradträgerhals gelagert ist.

Die von der Ausgangswelle in das mindestens eine Planetenrad eingeleiteten Axialkräfte können von diesem an den Planetenradträger in der Weise günstig weitergegeben werden, daß das mindestens eine Planetenrad auf dem Planetenradträger durch mindestens ein axialkraftübertragendes Lager, beispielsweise Rillenkugellager, gelagert ist.

Für die Herstellung der Verzahnungen an dem Hohlrad und für den Einbau des Planetengetriebes in das Getriebegehäuse ist es günstig, wenn das Hohlrad von einem eine Außenverzahnung und eine Innenverzahnung aufweisenden Außenring und einem an diesem Außenring lösbar befestigten Hohlradträgerflansch gebildet ist, wobei der Hohlradträgerflansch an mindestens einem axialen Ende des Außenrings befestigt ist.

Für die Herstellung des Sonnenrads und des Planetenrads erweist es sich als vorteilhaft und kostengünstig, wenn das Sonnenrad und das mindestens eine Planetenrad mit geraden Verzahnungen ausgeführt sind. Diese geraden Verzahnungen können insbesondere dann gewählt werden, wenn das mindestens eine Planetenrad aus Kunststoff gefertigt ist.

An der Innenverzahnung des Hohlrads, die mit dem Planetenrad bzw. den Planetenrädern in Eingriff steht, wird ebenso wie an der Eingriffstelle zwischen Planetenrad und Sonnenrad ein geringeres Drehmoment übertragen als an der Eingriffstelle zwischen der Außenverzahnung des Hohlrads und dem Hauptzahnrad. Der Bedarf an Verzahnungsbreite ist deshalb innerhalb des Hohlrads geringer als der Bedarf an Verzahnungsbreite an der Außenseite des Hohlrads. Dies schafft die Möglichkeit, daß die Innenverzahnung des Hohlrads eine axiale Breite aufweist, welche geringer ist als die axiale Breite des Hauptzahnrads, und daß mindestens ein Teil der axialen Breite des Planetenradträgers in axialer Überlappung mit der axialen Breite des Hauptzahnrads untergebracht ist. Auf diese Weise erhält man einen gesamten axialen Breitenbedarf des Planetengetriebes, der den bei direkter Drehmomentübertragung von dem Hauptzahnrad auf die Ausgangswelle bestehenden Raumbedarf eines Ritzels nicht wesentlich übersteigt und man schafft somit erneut eine Voraussetzung dafür, daß man ohne Beeinträchtigung günstiger Montageverhältnisse und ohne sonstige unerwünschten Kompromisse in ein vorhandenes ursprünglich für direkten Eingriff zwischen Hauptzahnrad und Ausgangswelle konzipiertes Getriebegehäuse eine Planetenradübertragung zwischen Hauptzahnrad und Ausgangswelle einführen kann.

Wie an sich bei Verdichteranlagen der hier betrachteten Art mit direkter Drehmomentübertragung zwischen Hauptzahnrad und Ritzel einer Ausgangswelle bekannt, ist es vorteilhaft, wenn das Planetengetriebe und dessen Lagerungen im wesentlichen symmetrisch zu einer bezüglich der Ausgangswellenachse orthogonalen Symmetrieebene zwischen zwei Gehäusewänden des Lagergehäuses untergebracht ist.

Wie ebenfalls aus dem Stand der Technik beispielsweise nach der Figur der DE C2 40 03 482 bekannt, kann man einen Aufbau dergestalt wählen, daß die Ausgangswelle durch zwei einander gegenüberliegende Gehäusewände des Lagergehäuses hindurchgeführt ist.

Dann kann die Ausgangswelle an einem oder an beiden Enden den Läufer eines Verdichters beispielsweise eines Turbo- oder eines Schraubenverdichters tragen. Im Falle der Anordnung je eines Verdichters an beiden Enden kann man dann durch geeignete Schubkraftabstimmung dafür sorgen, daß die Ausgangswelle nur durch einen geringen resultierenden Axialschub belastet wird und demzufolge zwischen den Druckkämmen der Ausgangswelle und dem Planetenrad bzw. den Planetenrädern nur eine geringe Axialkraft übertragen werden muß.

Wie aus der DE C2 40 03 482 bekannt, ist es möglich, daß das Hauptzahnrad als ein Zentralrad in dem Verdichtergehäuse angeordnet ist und daß Lagerstellen für eine Mehrzahl von Ausgangswellen um die Achse des Zentralrads verteilt in dem Getriebegehäuse angeordnet sind. Man kann dann in eine oder mehrere Lagerstellen eine Ausgangswelle einsetzen, welche mit ihrem Ritzel in direktem Eingriff mit dem Zentralrad steht und man kann andererseits in eine oder mehrere Lagerstellen eine Ausgangswelle einsetzen, die über ein zugehöriges Planetengetriebe von dem Zentralrad her angetrieben wird. Dabei wird man immer wieder - sofern man die jeweilige Ausgangswelle beidendig mit je einem Verdichter besetzt - auf eine möglichst weitgehende Kompensation von Axialschüben an ein und derselben Ausgangswelle achten. Man kann dies insbesondere dadurch erreichen, daß man entweder zwei identische parallel geschaltete und daher auch gleichmäßig beaufschlagte Verdichter ein und derselben Ausgangswelle zuordnet. Man kann aber auch zwei in einer mehrstufigen Verdichteranordnung schaltungsmäßig benachbarte Verdichtereinheiten auf ein und dieselbe Ausgangswelle setzen. Das Hauptzahnrad kann drehfest mit der Eingangswelle verbunden sind und über diese etwa mit einem Elektromotor oder mit einer Kolbenbrennkraftmaschine oder mit einer Gas- oder Dampfturbine verbunden sein. Wählt man als Antriebseinheit eine Gasturbine so ist es auch denkbar, von dieser Gasturbine zum Zentralrad eine Übersetzung ins Langsame vorzunehmen, d.h. die Gasturbine mit einem treibenden Ritzel kleinen Durchmessers an die Umfangsverzahnung des Zentralrads anzukoppeln.

Die erfindungsgemäße Gestaltung der Verdichtereinheit ist insbesondere für Verdichtung von Prozeßmedien der chemischen Industrie im weitesten Sinne geeignet, wobei zur chemischen Industrie in diesem Fall auch die erdölverarbeitende Industrie und die nahrungs- und genußmittelverarbeitende Industrie und dgl. zählen. In diesen Industrien werden hohe Verdichtungsgrade gefordert. Man kann die von den einzelnen Ausgangswellen angetriebenen Verdichtereinheiten beliebig verschalten, wobei wenigstens ein Teil der Verdichtereinheiten häufig in Serie geschaltet wird, um ein Prozeßmedium nach und nach auf den geforderten Druck zu bringen. Es soll auch nicht ausgeschlossen werden, daß eine oder mehrere Verdichterstufen im höhen Druckniveaubereich unabhängig von dem Zahnradgetreibe angetrieben werden, beispielsweise durch eine Abgasturbine, welche durch eine gerade zur Verfügung stehende Abgasquelle angetrieben werden kann. Auch ist es denkbar, in Übereinstimmung mit der parallel laufenden Anmeldung der Anmelderin mit dem Aktenzeichen P 42 39 138.5 mindestens eine Verdichtereinheit durch eine Turbine anzutreiben, die ihrerseits durch einen vorverdichteten Anteil des Prozeßmediums aus einem über das Zahnradgetriebe angetriebene Verdichterstufe mittleren Druckniveaus angetrieben wird.

Die beiliegenden Figuren erläutern die Erfindung anhand eines Ausführungsbeispiels. Es stellen dar
- Figur 1: eine Verdichteranlage nach der Erfindung und
- Figur 2: ein Planetengetreibe, welches beispielsweise an der Position II der Fig. 1 zwischen Ritzel und Zentralzahnrad eingeschaltet sein kann.

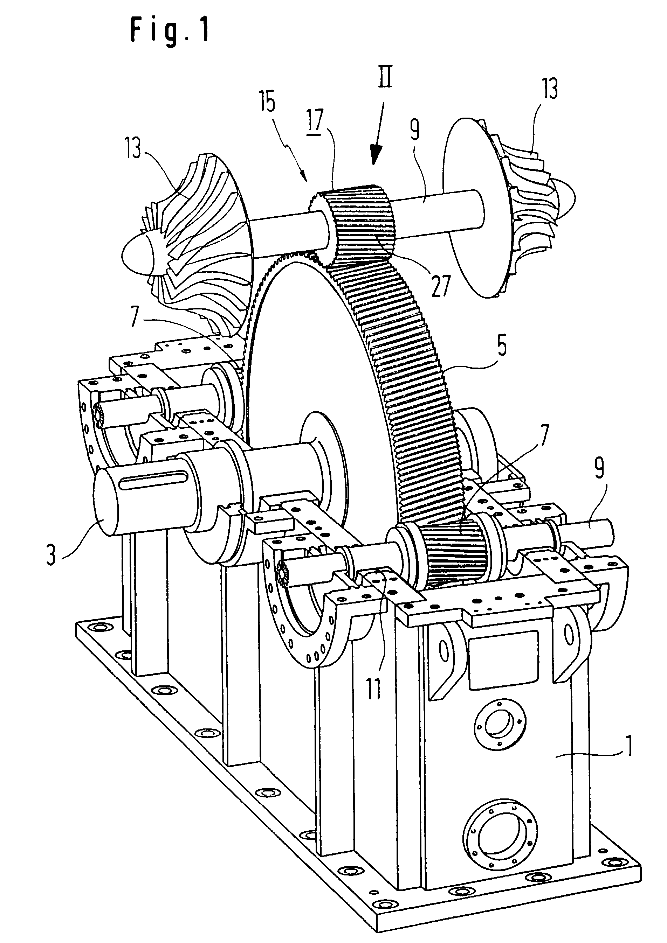

In Fig. 1 ist in perspektivischer Darstellung ein Teil einer Verdichteranlage gezeigt. Im unteren Teil eines Getriebegehäuses 1 ist ein drehfest mit einer Getriebeeingangswelle 3 verbundenes Hauptzahnrad 5 gelagert. Das Hauptzahnrad 5 treibt mehrere ebenfalls in dem Verdichtergehäuse 1 gelagerte Ritzel 7. Mit den Ritzeln 7 drehfest verbundene Ausgangswellen 9 erstrecken sich durch Lageröffnungen 11 des Gehäuses 1 hindurch über die Gehäusewände hinaus und können, wie an der obersten Ritzelwelle 9 gezeigt, an beiden Enden Läufer 13 von Verdichtern tragen. Das die in Fig. 1 oben liegende Ausgangswelle 9 antreibende Ritzel ist das Sonnenrad eines Planetengetriebes 15, dessen Hohlrad 17 eine Außenverzahnung aufweist und zum Antrieb der Ausgangswelle 9 mit dem als Zentralrad ausgebildeten Hauptzahnrads 5 kämmt.

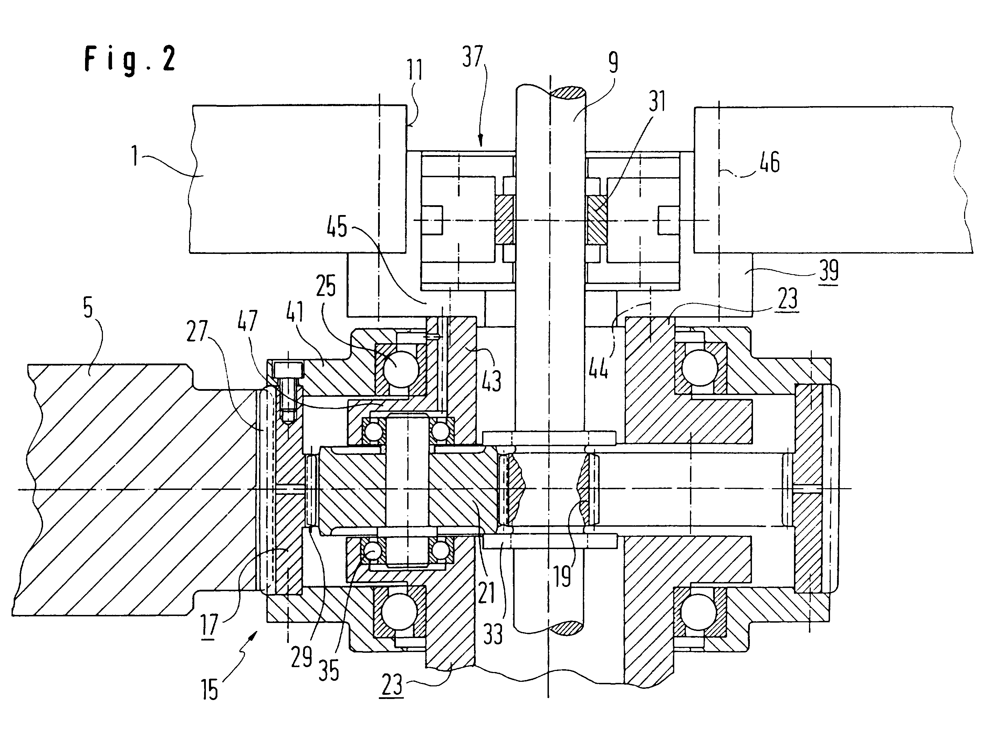

In Fig. 2 ist das Planetengetriebe 15 zusammen mit einem Teil des Hauptzahnrads 5 und des Getriebegehäuses 1 im Schnitt dargestellt. Die Ausgangswelle 9 ist drehfest mit einem Sonnenrad 19 verbunden und erstreckt sich durch die Lageröffnung 11 des Gehäuses 1 hindurch nach außen. Wie in Fig. 2 gezeigt, kämmt das Sonnenrad 19 mit Planetenrädern, die in dem relativ zum Gehäuse 1 festgelegten Planetenradträger 23 drehbar gelagert sind. Das Planetenrad 21 überträgt die Drehung des vom Hauptzahnrad 5 angetriebenen Hohlrads 17 auf das Sonnenrad 19. Mittels eines Schrägkugellagers 25 ist das Hohlrad 17 am drehfesten Planetenradträger 23 drehbar gelagert. Das Hohlrad 17 weist zum Eingriff mit der Schrägverzahnung des Hauptzahnrads 5 eine schräge Außenverzahnung 27 auf sowie an ihrem Innenumfang eine mit dem Planetenrad 21 kämmende, in diesem Fall gerade Innenverzahnung 29.

Das in diesem Beispiel gezeigte Planetengetriebe 15 hat ein Übersetzungsverhältnis zwischen der Drehzahl des Hauptzahnrads 5 und der Drehzahl der Ausgangswelle 9 von 23,5. Dies bedeutet bei einer Hauptzahnraddrehzahl von 2.980 min⁻¹ eine Ausgangswellendrehzahl von 70.000 min⁻¹ mit einer Drehzahl des Hohlrads 17 von 13.708 min⁻¹ und einer Drehzahl der Planetenräder 21 von 34.000 min⁻¹. Bei einer derart hohen Ausgangswellendrehzahl ist es nicht nur eine konstruktive Notwendigkeit zur Unterbringung des Planetengetriebes 15, sondern sogar höchst erwünscht, den Durchmesser der Sonnenradausgangswelle 9 klein zu halten. Dadurch lassen sich die in einem die Welle 9 lagernden Ölfilm-Gleitlager 31 auftretenden Reibungsverluste wegen der dem Durchmesser der Ausgangswelle 9 proportionalen Umlaufgeschwindigkeit derselben relativ gering halten. Ein von den Verdichterläufern 13 herrührender resultierender Verdichteraxialschub auf die Ausgangswelle 9 wird über an der Ausgangswelle 9 fest angebrachte Druckkämme 33 auf die Planetenräder 21 übertragen. Wegen der durch ein Rillenkugellager 35 gebildeten axialkraftübertragenden Lageranordnung wird dieser axiale Verdichterschub auf den Planetenradträger 23 und damit letztlich auf das fest mit dem Planetenradträger 23 verbundene Getriebegehäuse 1 übertragen.

Bei den in Fig. 1 gezeigten, direkt mit dem Hauptzahnrad 5 kämmenden Ausgangswellenritzeln 7 mit Druckkamm, wird ein resultierender Verdichteraxialschub dagegen auf das Hauptzahnrad 5 übertragen.

Da das Lager 31 der Planetengetriebeausgangswelle 9 in einer an die herkömmlichen Abmessungen der Lageröffnung 11 angepaßten Ausgangswellenlagereinheit 37 angeordnet ist, wird eine aufwendige Gehäuseneukonstruktion vermieden. Die Ausgangswellenlagereinheit 37 weist einen Lageraußenteil 39 auf, der die feste Verbindung zwischen dem Getriebegehäuse 1 und dem Planetenradträger 23 herstellt.

Da die in dem Planetengetriebe 15 übertragenen Drehmomente wesentlich kleiner sind als die Drehmomente, die von dem Hauptzahnrad 5 auf die Außenverzahnung des Hohlrads 17 übertragen werden, kann die axiale Breite der Verzahnungen im Inneren des Planetengetriebes 15 kleiner sein als die axiale Breite des Hauptzahnrads 5. Aus diesem Grunde kann das Planetengetriebe 15 axial besonders kompakt sein und somit in Gehäusen mit relativ geringer Breite eingebaut werden. Solche relativ schmalen Gehäuse sind im Hinblick auf Biegeschwingungen der in den Gehäusewänden gelagerten Wellen besonders vorteilhaft.

Das Hohlrad 17 ist über einen axial nur geringfügig über das Zentralrad hinausragenden, sich radial auf die Sonnenradwelle 9 zu erstreckenden Hohlradträgerflansch 41 über das Schrägkugellager 25 an einem Trägerhals 43 des Planetenradträgers 23 gelagert. In axialer Richtung liegt der Hohlradträgerflansch 41 zwischen einem Stützring 45 des Lageraußenteils 39 und einem die Planetenräder 21 tragenden Planetenradträgerflansch 47, der innerhalb der axialen Breite des Hauptzahnrads 5 angeordnet ist.

Der Trägerhals 43 des Planetenradträgers 23 ist mittels Schrauben 44 an dem Stützring 45 der Ausgangswellenlagereinheit 37 befestigt, und der Stützring 45 ist durch Schrauben 46 an dem Gehäuse 1 befestigt.

Das Lageraußenteil 39 der Ausgangswellenlagereinheit 37 und der Planetenradträger 23 sowie der Hohlradträgerflansch 41 können durch Druckguß erzeugt sein, was sich im Hinblick auf komplizierte Formen, Ölversorgungskanäle usw. als besonders günstig erweist.

In dem Planetengetriebe 15 sind bevorzugterweise drei in Umfangsrichtung gleichmäßig um die Sonnenradwelle 9 angeordnete Planetenräder 21 vorgesehen, so daß sich die über die Planetenräder 21 auf die Sonnenradwelle 9 übertragenen radialen Kräfte weitgehend kompensieren. Diese Planetenräder 21 können aus Kunststoff hergestellt sein.

Die erfindungsgemäße Verdichteranlage bietet also bei kompakter Bauweise sehr hohe Übersetzungen und ermöglicht damit sehr hohe Ausgangsdrücke eines in dieser Anlage verdichteten Mediums.

## Patentansprüche

1. Verdichteranlage mit einem im Antriebsstrang zwischen einer Antriebseinheit und einem Verdichterbereich der Anlage eingeschalteten Zahnradgetriebe,
dieses Zahnradgetriebe umfassend ein Getriebegehäuse (1), in diesem Getriebegehäuse (1) gelagert eine Getriebeeingangswelle (3), ein eingangsnahes Hauptzahnrad (5) und wenigstens eine von diesem Hauptzahnrad (5) her über ein Ritzel (7, 19) angetriebene zum Verdichterbereich führende Ausgangswelle (9) mit einer Achse,
dadurch gekennzeichnet,
daß das die Ausgangswelle (9) treibende Ritzel von dem Sonnenrad (19) eines Planetengetriebes (15) gebildet ist;
wobei ein Planetenradträger (23) dieses Planetengetriebes (15) an dem Getriebegehäuse (1) festgelegt ist;
wobei weiter ein Hohlrad (17) dieses Planetengetriebes (15) an einem gegenüber dem Getriebegehäuse (1) feststehenden Lagerteil (43) drehbar gelagert ist;
wobei weiter dieses Hohlrad (17) eine Außenverzahnung (27) im Eingriff mit dem eingangsnahen Hauptzahnrad (5) aufweist;
wobei weiter mindestens ein Planetenrad (21) auf dem Planetenradträger (23) gelagert ist und in Zahneingriff mit einer Innenverzahnung (29) des Hohlrads (17) sowie mit einer Außenverzahnung des Sonnenrads (19) steht;
wobei weiter das Sonnenrad (19) oder/und die Ausgangswelle (9) durch mindestens einen Druckkamm (33) in axialer Richtung an dem mindestens einen Planetenrad (21) axial festgelegt ist; und
wobei dieses mindestens eine Planetenrad (21) an dem Planetenradträger (23) durch eine axialkraftübertragende Lageranordnung (35) in axialer Richtung abgestützt ist.

2. Verdichteranlage nach Anspruch 1,
dadurch gekennzeichnet,
daß der mindestens eine Druckkamm (33) an dem mindestens einen Planetenrad (21) in radialer Nähe zu dem Verzahnungsteilkreis des Planetenrads (21) angreift.

3. Verdichteranlage nach Anspruch 1 oder 2,
dadurch gekennzeichnet,
daß die Ausgangswelle (9) durch eine Ausgangswellenlagereinheit (37) in einer Lageröffnung (11) einer Seitenwand des Getriebegehäuses (1) gelagert ist,
wobei diese Ausgangswellenlagereinheit (37) einen am Getriebegehäuse (1) in axialer Richtung und in Umfangsrichtung festgelegten Lageraußenteil (39) umfaßt.

4. Verdichteranlage nach Anspruch 3,
dadurch gekennzeichnet,
daß die Lageröffnung (11) gegenüber dem Durchmesser der Ausgangswelle (9) überdimensioniert ist, wobei die Überdimensionierung durch entsprechende Bemessung der Ausgangswellenlagereinheit (37) ausgeglichen ist.

5. Verdichteranlage nach einem Anspruch 3 und 4,
dadurch gekennzeichnet,
daß die Ausgangswellenlagereinheit (37) als Gleitlager (31), insbesondere mit lagerndem Ölfilm ausgeführt ist.

6. Verdichteranlage nach einem der Ansprüche 3 bis 5,
dadurch gekennzeichnet,
daß der Planetenradträger (23) an dem Lageraußenteil (39) der Ausgangswellenlagereinheit (37) befestigt ist.

7. Verdichteranlage nach Anspruch 6,
dadurch gekennzeichnet,
daß das Hohlrad (17) auf dem Planetenradträger (23) gelagert ist.

8. Verdichteranlage nach Anspruch 7,
dadurch gekennzeichnet,
daß die Außenverzahnung (27) des Hohlrads (17) als eine Einfachschrägverzahnung ausgebildet ist und daß das Hohlrad (17) an mindestens einem seiner axialen Enden an dem Planetenradträger (23) durch ein axialkraftübertragendes Kugellager, insbesondere Schrägkugellager (25), gelagert ist.

9. Verdichteranlage nach einem der Ansprüche 1 bis 8,
dadurch gekennzeichnet,
daß das mindestens eine Planetenrad (21) auf dem Planetenradträger (23) durch mindestens ein axialkraftübertragendes Lager, insbesondere Rillenkugellager (35), gelagert ist.

10. Verdichteranlage nach einem der Ansprüche 3 bis 9,
dadurch gekennzeichnet,
daß der Lageraußenteil (39) der Ausgangswellenlagereinheit (37) mit einem im Umfangsbereich der Lageröffnung (11) an der Innenseite der Gehäusewand anliegendem Stützring (45) ausgeführt ist, daß an diesem Stützring (45) in einem radial inneren Bereich desselben ein Trägerhals (43) des Planetenradträgers (23) befestigt ist, daß dieser Trägerhals (43) des Planetenradträgers (23) an einem planetenradnahen Ende mit einem radial auswärtsgerichteten Planetenradträgerflansch (47) ausgebildet ist und daß ein radial einwärts gerichteter Hohlradträgerflansch (41) in axialer Richtung zwischen dem Planetenradträgerflansch (47) und dem Stützring (45) auf dem Trägerhals (43) des Planetenradträgers (23) gelagert ist.

11. Verdichteranlage nach einem der Ansprüche 1 bis 8,
dadurch gekennzeichnet,
daß das Hohlrad (17) von einem eine Außenverzahnung (27) und eine Innenverzahnung (29) aufweisenden Außenring und einem an diesem Außenring lösbar befestigten Hohlradträgerflansch (41) gebildet ist, wobei der Hohlradträgerflansch (41) an mindestens einem axialen Ende des Außenrings befestigt ist.

12. Verdichteranlage nach einem der Ansprüche 1 bis 11,
dadurch gekennzeichnet,
daß das Sonnenrad (19) und das mindestens eine Planetenrad (21) mit geraden Verzahnungen ausgeführt sind.

13. Verdichteranlage nach einem der Ansprüche 1 bis 12,
dadurch gekennzeichnet,
daß das mindestens eine Planetenrad (21) aus Kunststoff gefertigt ist.

14. Verdichteranlage nach einem der Ansprüche 1 bis 13,
dadurch gekennzeichnet,
daß die Innenverzahnung (29) des Hohlrads (17) eine axiale Breite aufweist, welche geringer ist als die axiale Breite des Hauptzahnrads (5) und daß mindestens ein Teil der axialen Breite des Planetenradträgers (23) in axialer Überlappung mit der axialen Breite des Hauptzahnrads (5) untergebracht ist.

15. Verdichteranlage nach einem der Ansprüche 1 bis 14,
dadurch gekennzeichnet,
daß das Planetengetriebe (15) und dessen Lagerungen im wesentlichen symmetrisch zu einer bezüglich der Ausgangswellenachse orthogonalen Symmetrieebene zwischen zwei Gehäusewänden des Getriebegehäuses (1) untergebracht sind.

16. Verdichteranlage nach einem der Ansprüche 1 bis 15,
dadurch gekennzeichnet,
daß die Ausgangswelle (9) durch zwei einander gegenüberliegende Gehäusewände des Getriebegehäuses hindurchgeführt ist.

17. Verdichteranlage nach einem der Ansprüche 1 bis 16,
dadurch gekennzeichnet,
daß die Ausgangswelle (9) an mindestens einem Ende den Läufer (13) eines Verdichters insbesondere eines Turbo- oder Schraubenverdichters trägt.

18. Verdichteranlage nach einem der Ansprüche 1 bis 17,
dadurch gekennzeichnet,
daß ein Paar von Verdichtereinheiten (13) mit den beiden Enden einer Ausgangswelle (9) derart verbunden sind, daß von diesen Verdichtereinheiten (13) auf die Ausgangswelle (9) übertragene Axialschübe sich wenigstens teilweise kompensieren.

19. Verdichteranlage nach einem der Ansprüche 1 bis 18,
dadurch gekennzeichnet,
daß das Hauptzahnrad (5) als ein Zentralrad in dem Getriebegehäuse (1) angeordnet ist und daß Lagerstellen (11) für eine Mehrzahl von Ausgangswellen (9) um die Achse des Zentralrads (5) verteilt in dem Getriebegehäuse (1) angeordnet sind.

20. Verdichteranlage nach Anspruch 19,
dadurch gekennzeichnet,
daß in mindestens einer der Lagerstellen (11) eine Ausgangswelle (9) mit zugehörigem Ritzel (7) gelagert ist, welches in direktem Zahneingriff mit dem Hauptzahnrad (5) steht.

21. Verdichteranlage nach einem der Ansprüche 1 bis 20,
dadurch gekennzeichnet,
daß das Hauptzahnrad (5) drehfest mit der Eingangswelle (3) verbunden ist.

## Claims

1. A compressor system having a toothed wheel gear unit inserted in the drive train between a drive unit and a compressor region of the system, said toothed wheel gear unit comprising a transmission housing (1), a transmission input shaft (3) being supported in this transmission housing (1), a main gearwheel (5) near the input and at least one output shaft (9) with an axis, driven by the main gearwheel (5) by way of a pinion (7,19) and leading to the compressor region,
characterized in that
the pinion driving the output shaft (9) is composed of a sun gear (19) of a planetary gear (15),
wherein a planet carrier (23) of this planetary gear (15) is fixed to the transmission housing (1),
wherein further a ring gear (17) of this planetary gear (15) is rotatably supported on a bearing part (43) that is stationary with respect to the transmission housing (1), the ring gear (17) having outer teeth (27),
wherein further said ring gear (17) comprises outer teeth (27)
being in engagement with the main gearwheel (5) near the input,
wherein further at least one planet gear (21) is supported on the planet carrier (23) and is in toothed engagement with inner teeth (29) of the ring gear (17) and with outer teeth of the sun gear (19),
wherein further the sun gear (19) or/and said output shaft (9) are fixed in the axial direction by at least one pressure plate (33) at the at least one planet gear (21), and
wherein said at least one planet gear (21) is supported in the axial direction on the planet carrier (23) by an axial force-transmitting bearing arrangement (35).

2. The compressor system according to claim 1,
characterized in that
said at least one pressure plate (33) engages said at least one planet gear (21) in radial vicinity to the pitch circle of the teeth of the planet gear (21).

3. The compressor system according to claim 1 or 2,
characterized in that said output shaft (9) is supported by an output shaft bearing unit (37) in a bearing opening (11) of a side wall of the transmission housing (1), said output shaft bearing unit (37) comprising an outer bearing part (39) fixed on the transmission housing (1) in both the axial and circumferential directions.

4. The compressor system according to claim 3,
characterized in that
the bearing opening (11) is oversized with respect to the diameter of the output shaft (9), the output shaft bearing unit (37) being dimensioned to compensate for said oversizing.

5. The compressor system according to one of claims 3 or 4,
characterized in that
the output shaft bearing unit (37) is designed as a sliding bearing (31), in particular with a bearing oil film.

6. The compressor system according to one of claims 3 to 5,
characterized in that
the planet carrier (23) is fastened to the outer bearing part (39) of the output shaft bearing unit (37).

7. The compressor system according to claim 6,
characterized in that
the ring gear (17) is supported on the planet carrier (23).

8. The compressor system according to claim 7,
characterized in that
the outer teeth (27) of the ring gear (17) are designed as plain helical teeth, and in that the ring gear (17), at at least one axial end thereof, is supported on the planet carrier (23) by an axial force-transmitting ball bearing, in particular an angular ball bearing (25).

9. The compressor system according to one of claims 1 to 8,
characterized in that
said at least one planet gear (21) is supported on the planet carrier (23) by at least one axial force-transmitting bearing, in particular a groove ball bearing (35).

10. The compressor system according to one of claims 3 to 9,
characterized in that
the outer bearing part (39) of the output shaft bearing unit (37) includes a support ring (45) resting on the inside of the housing wall in the peripheral region of the bearing opening (11), that a carrier neck (43) of the planet carrier (23) is fastened to this support ring (45) in a radially inner region thereof, that this carrier neck (43) of the planet carrier (23), at an end near the planet gear, includes a planet carrier flange (47) extending radially outward, and that a ring gear carrier flange (41), extending radially inward, is supported on the carrier neck (43) of the planet carrier (23) axially between the planet carrier flange (47) and the support ring (45).

11. The compressor system according to one of claims 1 to 8,
characterized in that
the ring gear (17) is composed of an outer ring, having outer teeth (27) and inner teeth (29), and a ring gear carrier flange (41) fastened detachably to the outer ring, the ring gear carrier flange (41) being fixed to at least one axial end of the outer ring.

12. The compressor system according to one of claims 1 to 11,
characterized in that
the teeth of the sun gear (19) and said at least one planet gear (21) are straight teeth.

13. The compressor system according to one of claims 1 to 12,
characterized in that
said at least one planet gear (21) is made of synthetic material.

14. The compressor system according to one of claims 1 to 13,
characterized in that
the inner teeth (29) of the ring gear (17) have an axial width which is smaller than the axial width of the main gearwheel (5), and that at least part of the axial width of the planet carrier (23) is accommodated in an axially overlapping relationship with the axial width of the main gearwheel (5) .

15. The compressor system according to one of claims 1 to 14,
characterized in that
the planetary gear (15) and the bearings thereof are accommodated, substantially symmetrical to a plane of symmetry orthogonal with reference to the axis of the output shaft, between two housing walls of the transmission housing (1).

16. The compressor system according to one of claims 1 to 15,
characterized in that
said output shaft (9) extends through two housing walls of the transmission housing facing each other.

17. The compressor system according to one of claims 1 to 16,
characterized in that,
at at least one end, said output shaft (9) carries the rotor (13) of a compressor, in particular of a turbocompressor or screw-type compressor.

18. The compressor system according to one of claims 1 to 17,
characterized in that
a pair of compressor units (13) are connected with the two ends of one output shaft (9) so that axial thrusts transmitted by said compressor units (13) to said output shaft (9) are at least partially offset.

19. The compressor system according to one of claims 1 to 18,
characterized in that
the main gearwheel (5) is arranged as a central wheel in the transmission housing (1), and that bearings (11) for a plurality of output shafts (9) are distributed about the axis of the central wheel (5) and mounted in the transmission housing (1).

20. The compressor system according to claim 19,
characterized in that
an output shaft (9), having an associated pinion (7) in direct toothed engagement with the main gearwheel (5), is supported in at least one of the bearings (11).

21. The compressor system according to one of claims 1 to 20,
characterized in that
the main gearwheel (5) is connected in a rotationally fixed manner to the input shaft (3).

## Revendications

1. Système à compresseur comportant un engrenage monté dans la chaîne cinématique entre une unité d'entraînement et une zone de compresseur du système,
cet engrenage comportant un carter d'engrenage (1), un arbre d'entrée d'engrenage (3) monté dans ce carter d'engrenage (1), une roue dentée principale (5) voisine de l'entrée et au moins un arbre de sortie (9) entraîné par cette roue dentée principale (5), par l'intermédiaire d'un pignon (7, 19), menant à la zone de compresseur, avec un axe,
caractérisé
en ce que le pignon entraînant l'arbre de sortie (9) est formé par la roue planétaire (19) d'un engrenage planétaire (15) ;
dans lequel un porte-satellites (23) de cet engrenage planétaire (15) est fixé sur le carter d'engrenage (1) ;
dans lequel en outre une couronne (17) de cet engrenage planétaire (15) est montée tournante sur un élément de palier (43) fixe par rapport au carter d'engrenage (1) ;
dans lequel en outre cette couronne (17) comporte une denture extérieure (27) en engagement avec la roue dentée principale (5) voisine de l'entrée ;
dans lequel en outre au moins une roue satellite (21) est montée sur le porte-satellites (23) et est en engrènement avec une denture intérieure (29) de la couronne (17) ainsi qu'avec une denture extérieure de la roue planétaire (19) ;
dans lequel en outre la roue planétaire ou/et l'arbre de sortie (9) est fixé axialement par au moins un peigne de pression (33) dans la direction axiale, sur ladite au moins une roue satellite (21) et
dans lequel cette au moins une roue satellite (21) est soutenue axialement contre le porte-satellites (23), par un dispositif à palier (35) transmettant les forces axiales.

2. Système à compresseur selon la revendication 1,
caractérisé en ce que ledit au moins un peigne de pression (33) agit sur ladite au moins une roue satellite (21), à proximité radiale du cercle partiel de denture de la roue satellite (21).

3. Système à compresseur selon la revendication 1 ou 2,
caractérisé
en ce que l'arbre de sortie (9) est monté par une unité de palier d'arbre de sortie (37) dans une ouverture de palier (11) d'une paroi latérale du carter d'engrenage (1), cette unité de palier d'arbre de sortie (37) comportant un élément extérieur de palier (39) fixé dans la direction axiale et dans la direction périphérique sur le carter d'engrenage (1).

4. Système à compresseur selon la revendication 3,
caractérisé
en ce que l'ouverture de palier (11) est surdinensionnée par rapport au diamètre de l'arbre de sortie (9), le surdimensionnement étant compensé par un dimensionnement correspondant de l'unité de palier d'arbre de sortie (37).

5. Système à compresseur selon l'une des revendications 3 et 4, caractérisé
en ce que l'unité de palier d'arbre de sortie (37) est réalisée en palier glissant (31), en particulier avec un film d'huile d'appui.

6. Système à compresseur selon l'une des revendications 3 à 5, caractérisé en ce que le porte-satellites (23) est fixé sur l'élément extérieur de palier (39) de l'unité de palier d'arbre de sortie (37).

7. Système à compresseur selon la revendication 6,
caractérisé en ce que la couronne (17) est montée sur le porte-satellite (23).

8. Système à compresseur selon la revendication 7,
caractérisé
en ce que la denture extérieure (27) de la couronne (17) est configurée en denture hélicoïdale et en ce que la couronne (17) est montée sur au moins l'une de ses extrémités axiales, sur le porte-satellites (23), par un roulement à billes transmettant les forces axiales, en particulier un roulement à billes à contact oblique (25).

9. Système à compresseur selon l'une des revendications 1 à 8 caractérisé
en ce que ladite au moins une roue satellite (21) au moins est montée sur le porte-satellites (23) par au moins un palier transmettant les forces axiales, en particulier un roulement rainuré à billes (35).

10. Système à compresseur selon l'une des revendications 3 à 9, caractérisé
en ce que l'élément extérieur de palier (39) de l'unité de palier d'arbre de sortie (37) est réalisé avec une bague d'appui (45) s'appliquant dans la zone périphérique de l'ouverture de palier (11), contre le côté intérieur de la paroi de carter, en ce que sur cette bague d'appui (45) est fixé, dans une zone radialement intérieure de celle-ci, un collet de support (43) du porte-satellites (23), en ce que ce collet de support (43) du porte-satellites (23) présente, à une extrémité proche de la roue satellite, une bride de support de couronne (47), dirigée radialement vers l'extérieur et en ce qu'une bride de support de couronne (41), dirigée radialement vers l'intérieur, est montée en direction axiale, entre la bride de support de roue satellite (47) et la bague d'appui (45), sur le collet de support (43) du porte-satellites (23).

11. Système à compresseur selon l'une des revendications 1 à 8, caractérisé
en ce que la couronne (17) est formée par une bague extérieure, présentant une denture extérieure (27) et une denture intérieure (29), et par une bride de support de couronne (41) fixée amovible sur cette bague extérieure, la bride de support de couronne (41) étant fixée sur au moins une extrémité axiale de la bague extérieure.

12. Système à compresseur selon l'une des revendications 1 à 11, caractérisé
en ce que la roue planétaire (19) et ladite au moins une roue satellite (21) sont réalisées avec des dentures droites.

13. Système à compresseur selon l'une des revendications 1 à 12, caractérisé
en ce que ladite au moins une roue satellite (21) est réalisée en matière plastique.

14. Système à compresseur selon l'une des revendications 1 à 13, caractérisé
en ce que la denture intérieure (29) de la couronne (17) présente une largeur axiale, qui est inférieure à la largeur axiale de la roue dentée principale (5) et en ce qu'une partie au moins de la largeur axiale du porte-satellites (23), est logée en recouvrement axial avec la largeur axiale de la roue dentée principale (5).

15. Système à compresseur selon l'une des revendications 1 à 14, caractérisé
en ce que l'engrenage planétaire (15) et ses paliers sont logés sensiblement symétriquement par rapport à un plan de symétrie orthogonal à l'axe d'arbre de sortie, entre deux parois du carter d'engrenage (1).

16. Système à compresseur selon l'une des revendications 1 à 15, caractérisé
en ce que l'arbre de sortie (9) traverse deux parois opposées l'une à l'autre du carter d'engrenage.

17. Système à compresseur selon l'une des revendications 1 à 16, caractérisé
en ce que l'arbre de sortie (9) porte, à au moins une extrémité, le rotor (13) d'un compresseur, en particulier d'un turbo-compresseur ou d'un compresseur à vis.

18. Système à compresseur selon l'une des revendications 1 à 17, caractérisé
en ce qu'une paire d'unités de compresseur (13) est reliée aux deux extrémités d'un arbre de sortie (9), de manière que les poussées axiales, transmises depuis ces unités de compresseur (13) à l'arbre de sortie (9), se compensent au moins partiellement.

19. Système à compresseur selon l'une des revendications 1 à 18,
caractérisé
en ce que la roue dentée principale (5) est placée en tant qu'une roue centrale dans le carter d'engrenage (1) et en ce que des emplacements de palier (11) pour une pluralité d'arbres de sortie (9), sont répartis autour de l'axe de la roue centrale (5), dans le carter d'engrenage (1).

20. Système à compresseur selon la revendication 19,
caractérisé
en ce que dans au moins l'un des emplacements de palier (11) est monté un arbre de sortie (9) avec pignon (7) correspondant, qui est en engrènement direct avec la roue dentée principale (5).

21. Système à compresseur selon l'une des revendications 1 à 20, caractérisé
en ce que la roue dentée principale (5) est solidaire en rotation de l'arbre d'entrée (3).
